# EUROPÄISCHE PATENTSCHRIFT

(11) **EP 3 683 938 B1**
(45) Veröffentlichungstag und Bekanntmachung des Hinweises auf die Patenterteilung: **01.09.2021**
(21) Anmeldenummer: 19151887.7
(22) Anmeldetag: 15.01.2019
(51) Int. Cl.: H02K 9/19, H02K 5/20, H02K 5/02, H02K 15/14

(54) **GEKÜHLTES GEHÄUSE**
COOLED HOUSING
LOGEMENT REFROIDI

(43) Veröffentlichungstag der Anmeldung: 22.07.2020
(73) Patentinhaber: GF Casting Solutions AG, 8200 Schaffhausen (CH)
(72) Erfinder: Papadimitriou, Ilias, 8236 Büttenhardt (CH)
(74) Vertreter: Fenner, Seraina

(56) Entgegenhaltungen:
- CN-A- 107 947 510
- DE-A1-102005 052 361
- DE-A1-102005 052 363
- JP-A- H08 205 474

## Beschreibung

Die Erfindung betrifft ein Elektromotorgehäuse mit Kühlung vorzugsweise Flüssigkeitskühlung beinhaltend ein Gehäuse und einen Deckel, wobei das Gehäuse einen runden Querschnitt, einen Aussenmantel, eine Abschlusswandung und einen Innenmantel aufweist, wobei das Gehäuse als einteiliges Leichtmetallgussbauteil ausgebildet ist und ein spiralförmiges Element im Kühlspalt konzentrisch zum Innen- und Aussenmantel angeordnet ist, wobei das spiralförmige Element sich von der Abschlusswandung über die Länge des Innenmantels erstreckt und einen spiralförmigen Kühlkanal bildet der zwischen den Windungen des spiralförmigen Elements verläuft.

Elektromotoren generieren Wärme während ihrer Leistungsabgabe. Speziell bei Elektromotoren in Kraftfahrzeugen, die eine hohe Leistung abgeben ist es vorteilhaft diese zu kühlen um die Effizienz des Elektromotors zu gewährleisten. Eine Überhitzung eines Elektromotors kann auch Lagerschäden wie Schäden an der Wicklung verursachen.

Flüssigkeitsgekühlte Gehäuse für Elektromotoren sind meist aus mindestens zwei Komponenten zusammengebaut. In der Regel weisen sie ein inneres zylinderförmiges Bauteil auf, an dessen Aussenseite ein spiralförmig verlaufender Kühlkanal angeordnet ist, der beispielsweise mittels einer mechanischen Bearbeitung in die Aussenseite eingebracht wird oder im Falle eines Gussteils bereits mit einer solchen Aussenstruktur ausgebildet ist.

Um den Kühlkanal zu schliessen wird ein weiteres zylinderförmiges Bauteil konzentrisch zur Aussenseite angebracht und dadurch der Kühlkanal geschlossen. Die US 8 183 723 B2 wie auch die DE 10 2015 109 121 A1 wie auch die DE 10 2005 052 363 A1 zeigen solche Elektromotorengehäuse die mehrteilig aufgebaut sind.

Nachteilig bei den oben erwähnten Bauformen eines Elektromotorgehäuses ist, dass der Montageaufwand hoch ist da eine Abdichtung an beiden Stirnseiten zu erfolgen hat.

Es ist Aufgabe der Erfindung ein Elektromotorgehäuse und ein Verfahren zum Herstellen eines Elektromotorgehäuses vorzuschlagen, wobei das Elektromotorgehäuse wenige Dichtstellen aufweist und damit das Verfahren zum Herstellen des Elektromotorgehäuses eine kurze Montagezeit ermöglicht.

Diese Aufgabe wird erfindungsgemäss durch die Merkmalskombination gemäß unabhängigem Anspruch 1 für das Elektromotorgehäuse und durch die Merkmalskombination gemäß unabhängigem Anspruch 8 für das Verfahren gelöst, wobei das im Bezug auf den Innen- und Außenmantel als separates Teil ausgebildete spiralförmige Element und der Deckel einteilig ausgebildet sind. Das erfindungsgemässe Elektromotorgehäuse mit einer Flüssigkeitskühlung weist einen runden Querschnitt auf. Das Gehäuse beinhaltet einen Aussenmantel, einen Innenmantel und eine Abschlusswandung, wobei das Gehäuse einteilig bzw. einstückig ausgebildet ist, wodurch Dichtstellen reduziert werden können. Das Gehäuse ist als Leichtmetallgussteil ausgebildet, wobei es im Sand-, Kokillen- oder auch im Druckgussverfahren hergestellt werden kann.

Zwischen dem Aussenmantel und dem Innenmantel des Gehäuses besteht ein Kühlspalt. Darin angeordnet ist ein spiralförmig ausgebildetes Element. Das spiralförmige Element erstreckt sich von der Abschlusswandung über die Länge des Innenmantels, wobei das spiralförmige Element konzentrisch zum zueinander konzentrischen Innen- und Aussenmantel angeordnet ist. Durch die Anordnung des spiralförmigen Elements im Kühlspalt bildet sich ein spiralförmig verlaufender Kühlkanal, der durch das spiralförmige Element, die Aussenseite der Innenwand und die Innenseite der Aussenwand definiert wird. Die Windungen des spiralförmigen Kühlelements bilden die seitliche Begrenzung des spiralförmig verlaufenden Kühlkanals. Die Innenseite der Aussenwand begrenzt den Kühlkanal nach aussen und die Aussenseite der Innenwand begrenzt den Kühlkanal nach innen.

Erfindungsgemäß ist das spiralförmige Element als separates Teil ausgebildet. Dadurch kann es im Kühlspalt einfach angeordnet werden. Zudem kann es zum Gehäuse aus einem unterschiedlichen Material hergestellt sein. Das Material des spiralförmigen Elements kann beliebig sein, wobei sich ein Metall oder auch ein Kunststoff speziell gut eignet.

Erfindungsgemäß sind der Aussenmantel und der Innenmantel konzentrisch zueinander angeordnet. Dadurch wird ein gleichmässig über den Umfang verteilter Kühlspalt gewährleistet.

Als vorteilhaft hat sich gezeigt, wenn das spiralförmige Element an der Innenfläche des Aussenmantels und der Aussenfläche des Innenmantels anliegt, wodurch ein geschlossener spiralförmiger Kühlkanal gebildet wird. Dadurch wird erreicht, dass das Kühlmedium entlang des spiralförmigen Kühlkanals fliesst und eine Strömung ausschliesslich in axialer Richtung am Umfang verunmöglicht wird. Dadurch wird ein homogener Temperaturaustausch bzw. eine gleichmässige Kühlung über das komplette Elektromotorgehäuse gewährleistet. Zudem erfährt das Gehäuse eine Versteifung da der Aussenmantel sich über das spiralförmige Element am Innenmantel abstützt bzw. der Innenmantel über das spiralförmige Element am Aussenmantel.

Als vorteilhafte Ausführungsform hat sich gezeigt, wenn sich der spiralförmig verlaufende Kühlkanal über die komplette Länge des Innenmantels erstreckt. Dies gewährt eine konstante Kühlung über das Elektromotorgehäuse.

Vorteilhaft ist es, wenn die Aussenseite des Innenmantels und die Innenseite des Aussenmantels planar bzw. eben ausgebildet sind. Dies gewährleistet ein Anliegen des spiralförmigen Elements an der Aussen- und Innenseite und dadurch eine klare Begrenzung bzw. einen klaren Verlauf des Kühlkanals.

Erfindungsgemäß weist das Elektromotorgehäuse einen Deckel auf. Der Deckel ermöglicht, dass der Kühlspalt einen geschlossenen Raum darstellt.

Als vorteilhaft hat sich gezeigt, wenn der Deckel eine Dichtung aufweist. Dies gewährleistet, dass kein Kühlmedium aus dem Kühlspalt austritt.

Vorzugsweise erstreckt sich der Innenmantel bis zum Deckel und der Kühlspalt zwischen dem Aussenmantel und dem Innenmantel bildet einen geschlossenen Raum mit einem Ein- und Auslauf für das Kühlmedium.

Es ist vorteilhaft, wenn das spiralförmige Element eine Vorspannung aufweist. Dadurch kann ein fixierter Einbau des spiralförmigen Elementes gewährleistet werden ohne dass sich das spiralförmige Element axial verschiebt oder entlang des Umfangs verdreht oder rotiert. Alternativ können auch Anschläge oder Befestigungsmittel vorgesehen werden die ein Verschieben bzw. Verdrehen verhindern.

Das Gehäuse des des exemplarischen Elektromotorgehäuses, das nicht Teil der vorliegenden Erfindung ist, wird durch Giessen hergestellt, vorzugsweise im Kokillen-, Sand- oder Druckguss.

Ein Ausführungsbeispiel der Erfindung wird anhand der Figuren beschrieben, wobei sich die Erfindung nicht nur auf das Ausführungsbeispiel beschränkt. Es zeigen:
Fig. 1 einen Längsschnitt durch ein exemplarisches Elektromotorgehäuse das nicht Teil der vorliegenden Erfindung ist,

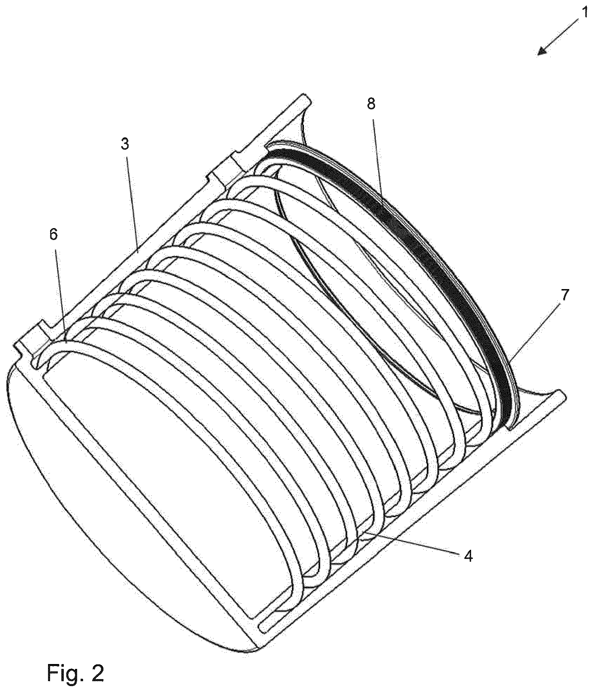

Fig. 2 eine dreidimensionale Ansicht eines Schnitts durch ein erfindungsgemässes Elektromotorgehäuse und
Fig. 3 einen Längsschnitt durch ein Gehäuse des erfindungsgemässen Elektromotorgehäuses.

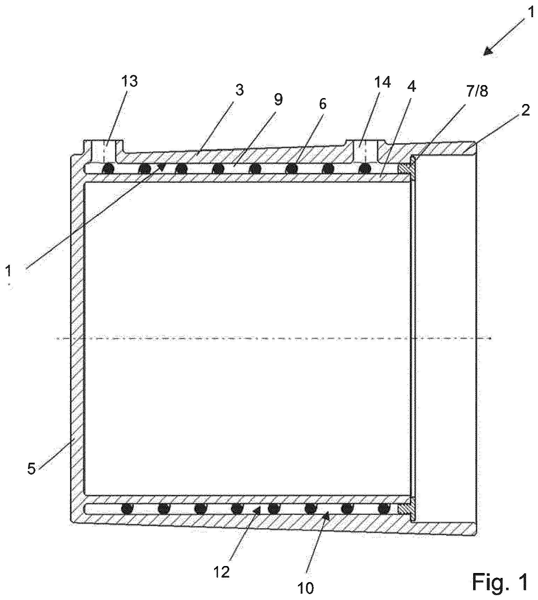

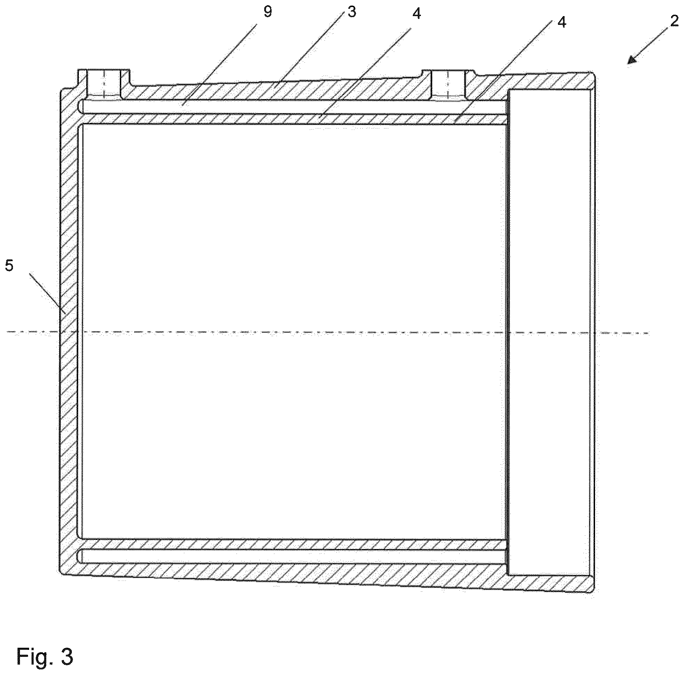

Die in Fig. 1 dargestellte Zeichnung zeigt einen Längsschnitt durch ein exemplarisches Elektromotorgehäuse 1. Gut ersichtlich ist, dass das Gehäuse 2 einteilig bzw. einstückig ausgebildet ist, was auch in Fig. 3 erkennbar ist wo es separat dargestellt ist. Das Gehäuse 2 weist einen Aussenmantel 3, einen Innenmantel 4 und eine Abschlusswandung 5 auf. Der Aussenmantel 3 und der Innenmantel 4 sind konzentrisch zueinander angeordnet und weisen einen runden Querschnitt auf, wie demzufolge das Gehäuse 2. Der Innenmantel 4 ist beabstandet zum Aussenmantel 3 angeordnet, wodurch zwischen der Innenseite 11 des Aussenmantels 3 und der Aussenseite 12 des Innenmantels ein Kühlspalt 9 gebildet ist. Im Kühlspalt 9 angeordnet befindet sich ein spiralförmiges Element 6, welches einen spiralförmig verlaufenden Kühlkanal 10 bildet. Das spiralförmige Element 6 tangiert die Innenseite 11 des Aussenmantels 3 und die Aussenseite 12 des Innenmantels 4 wodurch ein geschlossener spiralförmig verlaufender Kühlkanal 10 gebildet wird. Das spiralförmige Element 6 weist erfindungsgemäß einen runden Querschnitt auf, wobei aber auch andere Formen wie rechteckig, mehreckig oder oval, wie auch nicht geometrisch definierte Formen des Querschnitts denkbar sind. Das spiralförmige Element 6 erstreckt sich über die komplette Länge des Innenmantels 4, vorzugsweise weist das spiralförmige Element 6 eine Vorspannung auf, damit sich das spiralförmige Element 6 nicht verschiebt und der Kühlkanal 10 sich nicht verändert oder versperrt wird. Um einen geschlossenen Kühlspalt 9 für das Kühlmedium vorzusehen, ist am offenen Ende des Innenmantels 4 ein Deckel 7 angeordnet, dieser schliesst den Kühlspalt 9 ab, wobei im Deckel 7 vorzugsweise eine Dichtung 8 angeordnet ist, die gewährleistet, dass kein Kühlmedium austreten kann. Der Deckel 7 und das spiralförmige Element 6 sind einteilig ausgebildet. Das Elektromotorgehäuse 1 ist an einerr Kreislauf für das Kühlmedium angeschlossen weshalb der Aussenmantel 3 einen Einlauf 13 und einen Auslauf 14 aufweist. Über den Einlauf 13 strömt das Kühlmedium ein und durchströmt den Kühlkanal 10 und strömt über den Auslauf 14 aus.

### Bezugszeichenliste

- 1: Elektromotorgehäuse
- 2: Gehäuse
- 3: Aussenmantel
- 4: Innenmantel
- 5: Abschlusswandung
- 6: Spiralförmiges Element
- 7: Deckel
- 8: Dichtung
- 9: Kühlspalt
- 10: Kühlkanal
- 11: Innenseite Aussenwand
- 12: Aussenseite Innenwand
- 13: Einlauf
- 14: Auslauf

## Patentansprüche

1. Elektromotorgehäuse (1) mit Kühlung beinhaltend ein Gehäuse (2) und einen Deckel (7), wobei das Gehäuse (2) einen runden Querschnitt, einen Aussenmantel (3), eine Abschlusswandung (5) und einen Innenmantel (4) aufweist, wobei das Gehäuse (2) als einteiliges Leichtmetallgussbauteil ausgebildet ist, wobei zwischen dem Aussenmantel (3) und dem Innenmantel (4) ein Kühlspalt (9) gebildet ist und ein spiralförmiges Element (6) im Kühlspalt (9) konzentrisch zum zueinander konzentrischen Innen- und Aussenmantel (4,3) angeordnet ist, wobei das spiralförmige Element (6) sich von der Abschlusswandung (5) über die Länge des Innenmantels (4) bis zum Deckel (7) erstreckt und einen spiralförmigen Kühlkanal (10) bildet der zwischen den Windungen des spiralförmigen Elements (6) verläuft **dadurch gekennzeichnet, dass** das spiralförmige Element (6) im Bezug auf den Innen- und Außenmantel (4,3) als separates Teil ausgebildet ist und dass das spiralförmige Element (6) und der Deckel (7) einteilig ausgebildet sind.

2. Elektromotorgehäuse nach Anspruch 1, **dadurch gekennzeichnet, dass** das spiralförmige Element (6) an einer Innenfläche des Aussenmantels (4) und einer Aussenfläche des Innenmantels (3) anliegt, wodurch ein geschlossener spiralförmiger Kühlkanal (10) gebildet wird.

3. Elektromotorgehäuse (1) nach einem der Ansprüche 1 bis 2, **dadurch gekennzeichnet, dass** sich der Kühlkanal (10) über die komplette Länge des Innenmantels (4) erstreckt.

4. Elektromotorgehäuse (1) nach einem der Ansprüche 1 bis 3, **dadurch gekennzeichnet, dass** eine Aussenseite (12) des Innenmantels (4) und eine Innenseite (11) des Aussenmantels (3) planar bzw. eben ausgebildet sind.

5. Elektromotorgehäuse (1) nach Anspruch 4, **dadurch gekennzeichnet, dass** der Deckel (7) eine Dichtung (8) aufweist.

6. Elektromotorgehäuse (1) nach einem der Ansprüche 4 oder 5, **dadurch gekennzeichnet, dass** sich der Innenmantel (4) bis zum Deckel (7) erstreckt und der Kühlspalt (9) zwischen dem Aussenmantel (3) und dem Innenmantel (4) einen geschlossenen Raum mit einem Ein- und Auslauf (13, 14) für das Kühlmedium bildet.

7. Elektromotorgehäuse (1) nach einem der Ansprüche 1 bis 6, **dadurch gekennzeichnet, dass** das spiralförmige Element (6) eine Vorspannung aufweist.

8. Verfahren zum Herstellen eines Elektromotorgehäuses (1) nach Anspruch 1 bis 7, **dadurch gekennzeichnet, dass** das Gehäuse (2) des Elektromotorgehäuses (1) durch Giessen hergestellt wird, vorzugsweise im Druckgussverfahren.

## Claims

1. Electric motor housing (1) with cooling containing a housing (2) and a cover (7), wherein the housing (2) has a round cross section, an outer shell (3), a terminating wall (5) and an inner shell (4), wherein the housing (2) is formed as a one-piece lightweight metal cast component, wherein a cooling gap (9) is formed between the outer shell (3) and the inner shell (4) and a spiral-shaped element (6) is arranged in the cooling gap (9) concentrically to the inner and outer shells (4, 3) which are concentric to one another, wherein the spiral-shaped element (6) extends from the terminating wall (5) over the length of the inner shell (4) up to the cover (7) and forms a spiral-shaped cooling channel (10) which runs between the windings of the spiral-shaped element (6), **characterized in that** the spiral-shaped element (6) is formed as a separate part with respect to the inner and outer shells (4, 3), and **in that** the spiral-shaped element (6) and the cover (7) are formed in one piece.

2. Electric motor housing according to Claim 1, **characterized in that** the spiral-shaped element (6) bears against an inner surface of the outer shell (4) and an outer surface of the inner shell (3), as a result of which a closed spiral-shaped cooling channel (10) is formed.

3. Electric motor housing (1) according to one of Claims 1 to 2, **characterized in that** the cooling channel (10) extends over the complete length of the inner shell (4).

4. Electric motor housing (1) according to one of Claims 1 to 3, **characterized in that** an outer side (12) of the inner shell (4) and an inner side (11) of the outer shell (3) are formed to be planar or flat.

5. Electric motor housing (1) according to Claim 4, **characterized in that** the cover (7) has a seal (8).

6. Electric motor housing (1) according to one of Claims 4 or 5, **characterized in that** the inner shell (4) extends up to the cover (7) and the cooling gap (9) between the outer shell (3) and the inner shell (4) forms a closed space with an inlet and outlet (13, 14) for the cooling medium.

7. Electric motor housing (1) according to one of Claims 1 to 6, **characterized in that** the spiral-shaped element (6) has a pretensioning.

8. Method for producing an electric motor housing (1) according to Claim 1 to 7, **characterized in that** the housing (2) of the electric motor housing (1) is produced by casting, preferably using the pressure die casting method.

## Revendications

1. Carter de moteur électrique (1) à refroidissement, comportant un carter (2) et un couvercle (7), le carter (2) présentant une section transversale ronde, une enveloppe extérieure (3), une paroi d'extrémité (5) et une enveloppe intérieure (4), le carter (2) étant réalisé sous la forme d'une pièce coulée de métal léger, un intervalle de refroidissement (9) étant formé entre l'enveloppe extérieure (3) et l'enveloppe intérieure (4), et un élément en spirale (6) étant disposé dans l'intervalle de refroidissement (9) de manière concentrique par rapport à l'enveloppe intérieure et à l'enveloppe extérieure (4, 3) concentriques l'une à l'autre, l'élément en spirale (6) s'étendant de la paroi d'extrémité (5) sur la longueur de l'enveloppe intérieure (4) jusqu'au couvercle (7) et formant un canal de refroidissement en spirale (10) qui s'étend entre les spires de l'élément en spirale (6),
**caractérisé en ce que** l'élément en spirale (6) est réalisé sous la forme d'une pièce séparée par rapport à l'enveloppe intérieure et à l'enveloppe extérieure (4, 3), et **en ce que** l'élément en spirale (6) et le couvercle (7) sont réalisés d'une seule pièce.

2. Carter de moteur électrique selon la revendication 1, **caractérisé en ce que** l'élément en spirale (6) est en appui contre une surface intérieure de l'enveloppe extérieure (4) et une surface extérieure de l'enveloppe intérieure (3) de façon à former un canal de refroidissement en spirale (10) fermé.

3. Carter de moteur électrique (1) selon l'une quelconque des revendications 1 à 2, **caractérisé en ce que** le canal de refroidissement (10) s'étend sur toute la longueur de l'enveloppe intérieure (4).

4. Carter de moteur électrique (1) selon l'une quelconque des revendications 1 à 3, **caractérisé en ce qu'**une face extérieure (12) de l'enveloppe intérieure (4) et une face intérieure (11) de l'enveloppe extérieure (3) sont réalisées de manière planaire ou plane.

5. Carter de moteur électrique (1) selon la revendication 4, **caractérisé en ce que** le couvercle (7) présente un joint d'étanchéité (8).

6. Carter de moteur électrique (1) selon l'une quelconque des revendications 4 ou 5, **caractérisé en ce que** l'enveloppe intérieure (4) s'étend jusqu'au couvercle (7), et l'intervalle de refroidissement (9) forme entre l'enveloppe extérieure (3) et l'enveloppe intérieure (4) un espace fermé doté d'une entrée et d'une sortie (13, 14) pour le milieu de refroidissement.

7. Carter de moteur électrique (1) selon l'une quelconque des revendications 1 à 6, **caractérisé en ce que** l'élément en spirale (6) présente une précontrainte.

8. Procédé de fabrication d'un carter de moteur électrique (1) selon la revendication 1 à 7, **caractérisé en ce que** le carter (2) du carter de moteur électrique (1) est fabriqué par coulée, de préférence selon un procédé de coulée sous pression.
